# EUROPEAN PATENT APPLICATION

(11) **EP 2 154 346 A1**
(43) Date of publication of application: **17.02.2010**
(21) Application number: 09009481.4
(22) Date of filing: 22.07.2009
(51) Int. Cl.: F01N 13/18

(54) **Sealing gasket for exhaust pipes**

(30) Priority: 30.07.2008 IT TO20080593
(71) Applicant: Carl Freudenberg KG, 69469 Weinheim (DE)
(72) Inventor: Ramoino, Paolo, 10036 Settimo T.se (TO) (IT)

(57) **Abstract**

The present invention relates to a sealing gasket for exhaust pipes, to be inserted between facing surfaces of opposite flanges (15a, 15b) fastened to the ends of the exhaust pipes (18a, 18b) and comprising a refractory element (14) and a metallic body (12) shaped so as to contain the refractory element (14) and to provide a zone with an opening (21) for the passage of exhaust gases. The gasket has at least one rib having at least one ridge and arranged to exert pressure, with said at least one ridge, on at least one of the facing surfaces of the opposite flanges and to operate elastically. The invention also concerns the method of operation of the gasket.

## Description

### Technical field

The present invention generally relates to a sealing gasket for exhaust pipes.

More particularly, the present invention relates to a sealing gasket to be applied to pairs of flanges connected to the ends of exhaust pipes in order to ensure tightness between the flanges and to prevent leaks of exhaust gases.

### Prior art

Sealing gaskets to be inserted between flanges located at the ends of exhaust pipes in order to prevent leaks of exhaust gases in correspondence of connection regions between the exhaust pipes are well known.

In particular, sealing gaskets are known that include an insert of refractory material in correspondence of the connection region in order to improve the tightness of the gasket

For instance, a sealing gasket known from patent publication EP_1267049_A1 includes a ring of refractory material encapsulated in a first metal sheet folded with overlapping edges so as to have a toroidal shape (toroidal element), and a second metal sheet with substantially oval shape having a central hole whose diameter is slightly smaller than the outside diameter of the ring and whose inner rim is sandwiched between the overlapping edges of the first metal sheet.

The second sheet of the prior art document is arranged to form two plane surfaces extending on a middle plane of the toroidal element.

The prior art gasket, in use, operates in correspondence of a region where the flanges face each other and have facing folding radii so as to form a cavity housing the toroidal element of the gasket.

A first problem of such a prior art is that the sealing action of the gasket is provided by the toroidal element only, whereas the remaining plane portion, with oval shape, only assists in positioning the gasket and signalling the presence thereof.

Another problem of the prior art gasket is that the toroidal element, which in use works within a cavity, demands a particularly precise mounting; actually, otherwise, the risk exists that the toroidal element does not provide a seal because of a different pressure distribution due to a different compression exerted by the flanges along the circumference of the toroidal element.

A further problem of the prior art gasket is that anyway it demands assembling two metal sheets.

Other gaskets including an insert of refractory material at the flange connection region in order to improve the sealing action of the gasket are also known.

For instance, a sealing gasket known from patent publication EP_1386099_A1 demands providing two metal sheets to be arranged in facing relationship and to be suitably folded so as to form facing ribs capable of holding the insert of refractory material so as to form a toroidal sealing element.

First of all, such a gasket has the problem that the sealing action of the gasket is provided by the toroidal element in cooperation only with the outer plane ends of the opposite ribs, which work on the plane surfaces of the flanges. Second, such a gasket has the problem that it demands, for its manufacture, the provision of two metal sheets that are to be inserted in facing relationship between the flanges and are configured so as to hold the insert of refractory material.

By summarising, the Applicant has realised that the prior art gaskets including inserts of refractory material cannot effectively solve the problem of ensuring an optimum tightness, especially in case the mounting is scarcely precise.

The Applicant also has realised that the prior art gaskets demand particularly complex manufacturing processes, such as for instance the provision of two sheets to be joined.

### Description of the invention

It is an object of the present invention to provide a gasket with a refractory insert, which overcomes the problems mentioned above of the prior art.

The object is achieve by the sealing gasket for exhaust pipes as claimed.

The present invention also concerns a method of operation of a gasket with an insert of refractory material.

The claims are an integral part of the technical teaching provided herein in respect of the invention.

In accordance with a feature of a preferred embodiment, the sealing gasket for exhaust pipes to be inserted between facing surfaces of end flanges comprises a metallic body having a refractory element in a first zone and at least one rib in a second zone, which rib has at least one ridge (top) arranged to exert pressure on at least one of the facing surfaces of the flanges and to operate elastically.

In accordance with another feature of the present invention, the gasket includes S-shaped ribs, or single and/or multiple ribs.

In accordance with a further feature of the present invention, the gasket has an opening for the passage of exhaust gases, which is larger than or equal in size to a corresponding opening formed in the end or opposite flange,

### Brief Description of the Figures

The above and other features and advantages of the present invention will become apparent from the following description of preferred embodiments, made by way of non limiting example with reference to the accompanying drawings, in which elements denoted by a same or similar numerical reference denote elements having the same or similar functionality, and in which:
- Fig. 1 is a front view of a gasket according to the invention;
- Fig. 2a is a detail of a first embodiment of the gasket depicted in Fig. 1;
- Fig. 2b is a detail of a second embodiment of the gasket depicted in Fig. 1; and
- Fig. 3 is an exemplary assembly of the gasket according to the invention.

### Description of Preferred Embodiments

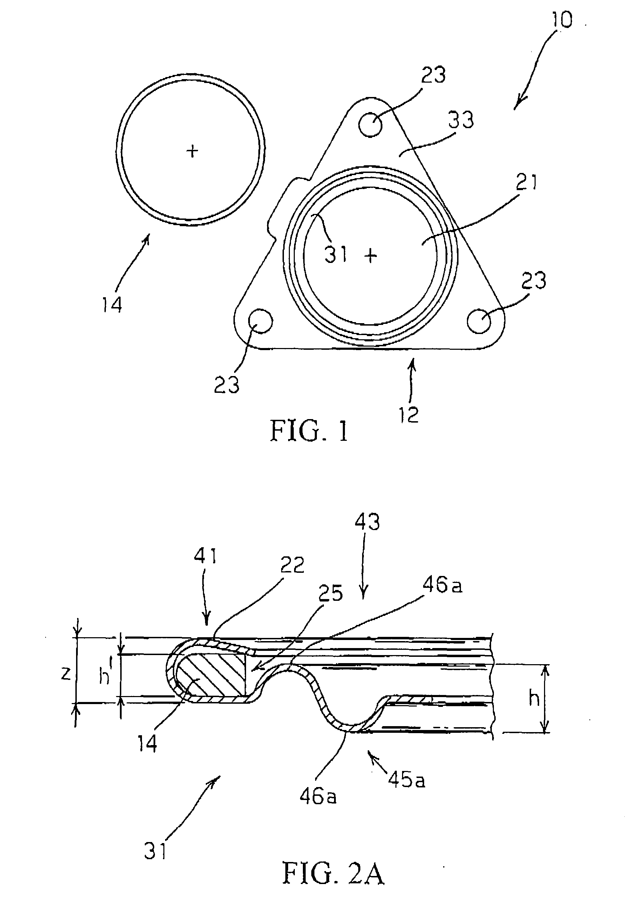

Referring to Fig. 1, a sealing gasket 10 for exhaust pipes according to the present invention comprises a body 12, for instance made from a sheet of metallic material such as stainless steel AISI 304, and an insert or refractory element 14 having a predetermined thickness h', capable of resisting high temperatures (800°C - 900°C) and made for instance of mineral fibre materials, such as commercially available materials intended for insulation.

Body 12 has for instance a triangular outline, the corners of which are preferably equipped with holes 23 arranged to enable clamping gasket 10 between end or opposite flanges 15a and 15b (Fig. 1, Fig, 3) fastened, in known manner, by mean of fastening members 19, to the ends of respective exhaust pipes 18a and 18b to be joined, and shaped so as to form an opening with predetermined shape for the passage of exhaust gases.

Of course, in other embodiments, body 12 may have an ovoid outline, or an outline with more than three sides, without thereby departing from the scope of the description and claims.

Body 12 further includes an opening 21, preferably barycentrically located relative to the body, having an edge 22 with such a size as to enable passage of exhaust gases for instance from an engine.

Opening (gas passage hole) 21 preferably has circular shape and such a shape is referred to in the Figures and the description, even though other shapes, for instance ovoid shapes, quadrangular shapes, etc., are possible without thereby departing from the scope of the description and claims.

Body 12 is preferably made from a single foil of metal sheet and it includes an active region 31, formed near edge 22 of opening (gas passage hole) 21 and arranged to cooperate with flanges 15a and 15b in order to provide a seal in respect of exhaust gases, and a fastening region 33, formed in correspondence of holes 23 (fastening holes) and arranged to be used for fastening gasket 10 to flanges 15a and 15b.

Fastening region 33 preferably has a plane surface.

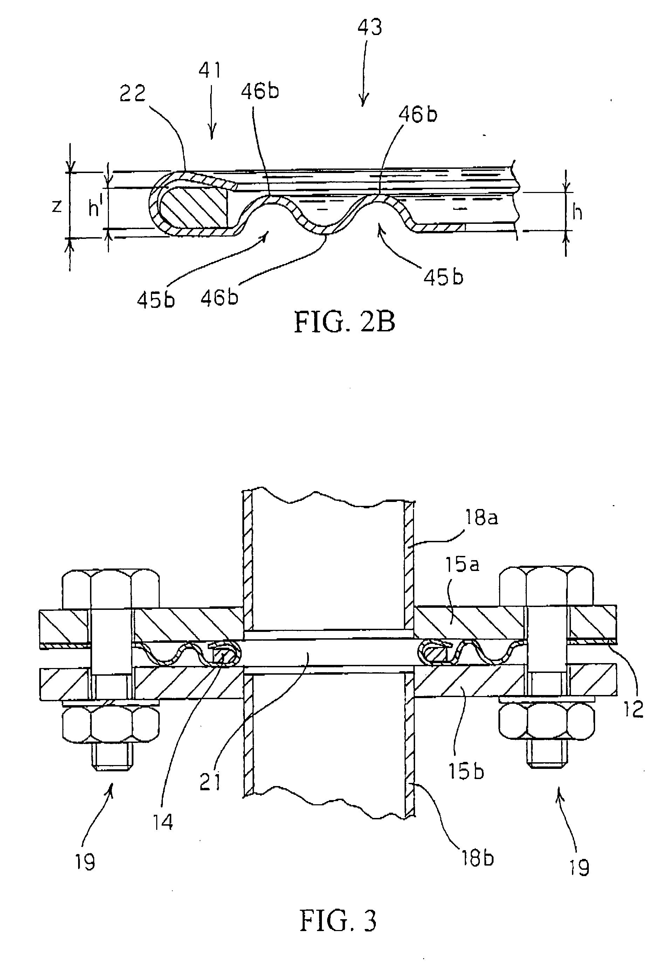

Active region 31 includes, from edge 22 of gas passage hole 21 towards fastening region 33:
- a first zone 41 (Fig. 2a and Fig. 2b), obtained for instance by folding the sheet and configured so as to house refractory element (fibrous element) 14, Generally, the first zone (folding zone) 41 has an opening whose size is larger than or equal to the size of the gas passage opening formed in the end flanges and, in the manufacturing phase, it is formed with a predetermined thickness "z"; more preferably, folding zone 41 has an opening whose size is slightly larger (e.g. 0.5 mm) than the size of the opening formed in end flanges 15a and 15b, so that such zone does not project into said opening, whereby it does not limit the exhaust gas flow and does not absorb excessive heat from such gases;
- a second zone 43, preferably adjacent to the first zone 41 and comprising one or more ribs 45a or 45b, respectively, which are arranged, in use, to operate elastically.

In accordance with a first embodiment, which is deemed to be preferable, ribs 45a (one or more) are S-shaped and have constant height h and projecting ridges 46a. Such ridges may have a curved or a sharp shape.

In accordance with a second embodiment, ribs 45b (one or more) are single or multiple ribs and have constant height h and projecting ridges 46a. Such ridges may have a curved or a sharp shape.

Both embodiments enable, especially in case of sharp ridges, concentrating the contact in a very small area of the flanges, thereby obtaining a very high specific pressure.

Ribs 45a in accordance with the first embodiment preferably have a greater height h than ribs 45b in accordance with the second embodiment.

More preferably, height h of ribs 45a or 45b is determined depending on thickness h' and the pliability characteristics of the fibrous element. For instance, for a same fibrous element, height h of the ribs made in accordance with the first embodiment ranges from 1.0 to 1.5 mm, and height h of the ribs made in accordance with the second embodiment ranges from 0.8 to 1.2 mm: different elastic characteristics of the ribs can thus be achieved, by using different thicknesses and/or materials for the metal sheet foil.

According to a further embodiment, in particular in case of flanges having high rigidity, it is provided to arrange a layer or sheet, preferably made of metal (for instance stainless steel), in an area corresponding to the fastening region 33.
According to said further embodiment, the layer or sheet (metal sheet) is preferably shaped so as to extend to all the fastening holes 23,
In operation, thanks to such embodiment, when fastening members 19, for instance bolts, are tightened, it is possible to ensure a constant mechanical response of the gasket 10 so as to avoid that bolts tightening affects or is affected by the active region 31,

The operation of gasket 10 (Fig. 1, Fig. 2a, Fig. 2b, Fig. 3) described above is as follows.

In a first step, gasket 10 is positioned between flanges 15a and 15b, welded or fastened to exhaust pipes 18a and 18b, respectively, to be joined. The flanges preferably have facing plane surfaces and the pipes are fastened to the flanges so that they do no project out from the respective plane surfaces of the flanges.

In a second step, fastening members 19, such as bolts of known type or stud bolts, are inserted into fastening holes 23, and the fastening members are locked, whereby flanges 15a and 15b are frontally brought close to each other.

During the step of gasket locking between the facing surfaces of the flanges, active region 31 of gasket 10 is compressed so that the first zone (folding zone) 41 first undergoes a plastic deformation and then operates elastically.

The plastic deformation of folding zone 41 stops the frontal approach of the flanges, so that also ribs 45a or 45b are loaded at their ridges 46a or 46b so as to operate elastically with characteristics depending on the embodiment selected.

At the end of the locking step, the elastic action of active region 31 is such that it ensures exhaust gas tightness both in case of small displacements of the flanges, due for instance to thermal variations, and in case of mechanical vibrations, due for instance to vibrations of the engine.

Advantageously, the gasket described herein, by working in correspondence of the facing surfaces of the flanges, does not require a particularly precise centring relative to the flanges.

Moreover, as the skilled in the art can readily appreciate, the shape of the ribs in the first embodiment enables compensating greater shape irregularities in the flanges than those that can be compensated with the second embodiment. The first embodiment allows sags of greater amplitude than allowed by the second embodiment.

Of course, also other rib shapes are possible, for instance shapes in which the ribs are a combination of both embodiments described or in which rib height h changes depending on the distance from edge 22 of opening 21, without thereby departing from the scope of the description and claims.

Part of the ribs can also be formed in areas that are not adjacent to folding zone 41, for instance at a distance of 2 - 3 mm from such a zone 41, in order to better compensate surface defects of the flange surfaces.

The construction of the gasket according to the present invention preferably comprises a sequence of cold mechanical operations, including:
- shearing the metallic material so as to obtain the outer shape of body 12, fastening holes 23 and a gas passage hole 21 with a size enabling folding edge 22 over fibrous element 14; of course, such a hole will have a size previously determined, for instance, according to the design specifications;
- forming the ribs by pressing or drawing, by bending edge 22 of opening 21 preferably at right angle or at an angle slightly smaller than 90° so as to form a housing cavity 25;
- positioning fibrous element 14 into housing cavity 25; of course, fibrous element 14 is preferably obtained in advance and in know manner by shearing, for instance from a sheet or a plate or a roll of fibrous material;
- folding edge 22 over fibrous element 14, for instance by means of a conical punch.

The gasket made in this manner is ready for use.

Of course, obvious modifications and/or variations can be made to the above description, in respect of the size, shapes, materials and components, as well as in the details of the illustrated construction and the operating method, without departing from the scope of the invention as set forth in the following claims.

## Claims

1. Sealing gasket for exhaust pipes to be inserted between facing surfaces of opposite flanges (15a, 15b) fastened to the ends of the exhaust pipes (18a, 18b), comprising
- a refractory element (14);
- a metallic body (12) shaped so as to contain said refractory element (14) and to provide a zone (41) with an opening (21) for the passage of exhaust gases;
**characterised by**
- at least one rib (45a, 45b) having at least one top (46a, 46b) arranged to exercise pressure, with said at least one top, on at least one of the facing surfaces of the opposite flanges (15a, 15b) and to operate elastically.

2. Gasket according to claim 1, wherein said at least one rib (45a) is a "S" shaped rib.

3. Gasket according to claim 2, wherein said at least one rib (45a) has a height (h) ranging between 1.0 and 1.5 mm.

4. Gasket according to claim 1, wherein said at least one rib (45b) is a single rib or a multi rib.

5. Gasket according to claim 4, wherein said at least one rib (45b) has a height (h) ranging between 0.8 and 1.2 mm.

6. Gasket according to any one of claims 1 to 5, wherein
- said opening (21) of said metallic body (12) is larger than or equal in size to a corresponding opening in said opposite flanges (15a, 15b).

7. Gasket according to any one of claims 1 to 6, wherein
- said zone (41) with an opening (21) for the passage of exhaust gases has a shape selected from the following shapes:
- a circular shape;
- an ovoidal shape;
- a quadrangular shape.

8. Gasket according to any one of claims 1 to 7 wherein said body has an outline selected from the following outlines
- an ovoidal outline;
- a triangular outline;
- an outline with more than three sides.

9. Working method of a sealing gasket for exhaust pipes to be inserted between facing surfaces of opposite flanges (15a, 15b) fastened to the ends of the exhaust pipes (18a, 18b), said gasket comprising in a first zone (41) a refractory element (14) and in a second zone (43) at least one rib (45a, 45b) having at least one top (46a, 46b), **characterised by** the step of
- making said at least one gasket (10) operate elastically by exercising pressure with said at least one top (46a, 46b) on at least one of the facing surfaces of the opposite flanges (15a, 15b).

10. Method according to claim 9, wherein said step of making the gasket operate elastically comprises
- applying a plastic strain in said first zone (41);
- making said first zone (41) and said second zone (43) operate elastically.
